# EUROPEAN PATENT APPLICATION

(11) **EP 4 793 674 A1**
(43) Date of publication of application: **19.08.2026**
(21) Application number: 25158576.6
(22) Date of filing: 18.02.2025
(51) Int. Cl.: G01V 8/00, G01S 13/88, G01S 13/89

(54) **MILLIMETER WAVE IMAGING DEVICE FOR THE INSPECTION OF AN OBJECT IN AN AUTOMATED PROCESSING ENVIRONMENT**

(71) Applicant: Basler AG, 22926 Ahrensburg (DE)
(72) Inventor: DEKARZ, Jens, 23843 Bad Oldesloe (DE)
(74) Representative: Eisenführ Speiser

(57) **Abstract**

The invention relates to a millimeter wave imaging device for the inspection of an object in an automated processing environment, in particular a logistics center, the device comprising a millimeter wave sensor providing millimeter wave data, wherein the millimeter wave sensor comprises a plurality transmitting antennas configured to emit millimeter wave signals and a plurality of receiving antennas configured to detect reflections of the emitted millimeter wave signals from within an observation volume, wherein the millimeter wave sensor is arranged in a sensor plane, wherein the millimeter wave sensor is arranged in near-field distance from a support plane, wherein the object is positioned on the support plane in an reconstruction volume in the observation volume when imaged, a processing unit, and wherein the processing unit is configured to receive the millimeter wave data from the millimeter wave sensor, and process the millimeter wave data to generate spatially resolved information about the reconstruction volume of the object, wherein the surface normal of the sensor plane has a non-perpendicular angle to the support plane.

## Description

### Technical field

The present invention relates to the field of millimeter wave imaging, particularly focusing on its application in logistic centers. Millimeter wave imaging is a technology that utilizes electromagnetic waves in the millimeter wave spectrum to create high-resolution images of objects. This technology is widely used in various industries, including security screening, medical imaging, and industrial inspection.

The present invention relates to a millimeter wave imaging device for the inspection of an object in an automated processing environment and a millimeter wave inspection system for inspecting objects on a transport mechanism in an automated processing environment.

The present invention also relates to a computer-readable storage medium storing program code, the program code comprising instructions for carrying out such a method.

Millimeter wave imaging technology is a technical field that focuses on the use of electromagnetic waves with wavelengths in the millimeter range (about 0.3 mm - about 10mm) for imaging purposes. However, millimeter waves imaging technology is not exactly limited to these wavelengths. The skilled person understands that at least partly also wavelengths below 1mm are encompassed by the terminology. For example, a millimeter wave imaging device may emit on frequencies from 30 to 80 GHz. A millimeter wave imaging device may emit frequencies up to at least 600 GHz or 800 GHz or more. This technology is particularly useful in applications where traditional imaging methods, such as visible light, infrared or X-ray imaging, may not be effective or possible. Millimeter waves can penetrate certain materials, such as fabrics or packaging material, for example cardboards and/or plastics, which makes millimeter waves useful for security screening and industrial inspection purposes.

WO 2023 129 451 A1 describes a system for producing a millimeter wave image of an object. The system includes a storage unit that is at least partially transparent to millimeter waves and is designed to contain the object. The system also includes a millimeter wave sensor that provides millimeter wave data.

Millimeter wave sensors typically comprise an array of transmitting antennas that emit millimeter wave signals and an array of receiving antennas that detect the reflections of these signals from within an observation volume.

The imaging process in millimeter wave systems involves several key steps: First, the transmitting antennas emit millimeter waves toward a reconstruction volume where the object is located. The reconstruction volume is within an observation volume from which millimeter wave radiation is detected. The emitted waves interact with the object and its surrounding surfaces or other solids surrounding the object, producing reflections that vary in intensity and phase depending on the material properties, shape, and orientation of the object. The receiving antennas then capture these reflected signals, recording the changes in amplitude and phase.

To process the data, the system typically applies a series of computational algorithms designed to convert the raw millimeter wave reflections into a usable image. These algorithms often involve signal processing techniques such as Fourier transformations to translate the frequency-domain data into spatial information. Additionally, phase unwrapping methods are used to correct for phase ambiguities, enabling accurate depth perception of the object. Image reconstruction techniques, such as Synthetic Aperture Radar (SAR) or Three-Dimensional (3D) imaging algorithms, may also be applied to develop a precise spatial representation of the object within the reconstruction volume.

In the current state of millimeter wave imaging systems, there are notable limitations that impact their efficiency and accuracy. One significant issue is the problem of reflections caused by the transport systems that convey objects to be imaged. These reflections can interfere with the imaging process, leading to distorted and/or overexposed or otherwise unclear images. This is particularly problematic in environments such as logistic centers, where a high volume of objects is constantly being moved and imaged.

The transport systems typically employ either roller conveyors or belt conveyors. In the former, objects are transported over a series of actively or passively rotating rollers, usually made of metal. In the latter, the belt is usually running on a metal plate. This is a challenge for millimeter wave imaging systems, as the metal surfaces in the observation volume can reflect the radiation in high intensity from the transmitting antenna onto the receiving antenna, causing artifacts that superpose or otherwise obscure the actual useful information. Furthermore, the power transmission is strongest when the radiation is emitted or received perpendicular to the antenna surface, meaning that metal surfaces in front of the sensor that are parallel to the sensor surface reflect the strongest. Radiation that comes from the side or back is weaker by several orders of magnitude.

The reflections, in particular those from transport systems, can result in false positives or negatives, reducing the reliability of the imaging system. Additionally, these reflections can complicate the image processing algorithms, requiring more sophisticated and computationally intensive methods to filter out the unwanted signals. This not only increases the processing time but also the overall cost of the imaging system.

Moreover, the presence of reflections can limit the ability of the imaging system to accurately detect and identify objects. This can be especially critical in applications where precise imaging is essential, such as in security screening or quality control in manufacturing processes. The limitations in the current systems necessitate the development of improved millimeter wave imaging technologies that can effectively mitigate the impact of reflections.

### Summary of the Invention

It is an objective of the present disclosure to provide a millimeter wave imaging system that overcomes the above limitations at least in part. The invention aims to enhance the accuracy and reliability of millimeter wave imaging, particularly in logistic centers, by reducing the interference caused by reflections from transport systems.

For a metal surface to mirror the radiation emitted by an emitting antenna to a receiving antenna, the surface normal of the metal surface must be aligned with the bisector with respect to the direction of the radiation incoming to the metal surface and reflected from the metal surface. Power transmission of a millimeter wave antenna is typically maximized in the direction perpendicular to the antenna surface due to the directional characteristic of the antenna. Accordingly, metal surfaces in front and parallel to the sensor surface reflect incoming radiation most strongly. Radiation transmitted by a sensor which is laterally outgoing with respect to the main emission direction of the antenna is orders of magnitude weaker. Therefore, it may be approximated that the most relevant reflections caused by metal surfaces occur when the surface normal of the sensors surface or the main emission direction of the sensor is perpendicular to the metal surface reflecting the radiation. Typically, the preferred transmission direction of the sensor, in which the power of the emitted radiation is typically magnitudes greater than in any other direction, lies in the direction along the surface normal of the surface of the sensor.

The inventors found that by tilting the sensor surface with respect to the direction of conveyance, rather than aligning it parallel to the transport plane most reflections caused by the transport system may be avoided, e.g. the preferred transmission direction along the surface normal of the sensors surface is not perpendicular to any surface parallel the transport plane. This configuration ensures that the reflected power of the power radiated head-on passes the sensor, preventing reflections of the most powerful radiation from metal surfaces in or directly on the reconstruction volume. By tilting the sensor surface at a non-perpendicular angle to the direction of conveyance, the invention effectively prevents reflections from metal surfaces parallel to the direction of conveyance in or directly on the reconstruction volume, thereby enhancing the quality of the imaging data and reducing artifacts in the images. The invention in particular allows to avoid reflections caused by support plates and/or rollers of a conveyor belt used for transporting objects through the reconstruction volume of the imaging system. Tilting the sensor ensures that the power emitted in the preferred direction due to the directional characteristics of the antenna is not reflected back onto the sensor.

A first aspect of the invention provides a millimeter wave imaging device for the inspection of an object in an automated processing environment, in particular a logistics center, the device comprising:
- a millimeter wave sensor providing millimeter wave data,
wherein the millimeter wave sensor comprises a plurality transmitting antennas configured to emit millimeter wave signals and a plurality of receiving antennas configured to detect reflections of the emitted millimeter wave signals from within an observation volume (V),
- wherein the millimeter wave sensor is arranged in a sensor plane (S1),
- wherein the millimeter wave sensor is arranged in near-field distance from a support plane (S2),
- wherein the object is positioned on the support plane (S2) in an reconstruction volume (R) in the observation volume (V) when imaged,
- a processing unit, and wherein the processing unit is configured to:
- receive the millimeter wave data from the millimeter wave sensor,
- process the millimeter wave data to generate spatially resolved information about the reconstruction volume (R) of the object, wherein the surface normal of the sensor plane (S1) has a non-perpendicular angle (a) to the support plane (S2).

The device of the first aspect pertains to a millimeter wave imaging device for the inspection of an object in an automated processing environment, particularly in a logistics center. The device comprises a millimeter wave sensor that provides millimeter wave data. The millimeter wave sensor includes a plurality of transmitting antennas that are configured to emit millimeter wave signals and a plurality of receiving antennas that are configured to detect reflections of the emitted millimeter wave signals from within an observation volume.

The millimeter wave imaging device typically operates within a frequency range between 50 GHz and 80 GHz. The millimeter wave imaging device can operate at frequencies up to 600 GHz or 800 GHz.

The millimeter wave sensor, also referred to as the sensor, is arranged in a sensor plane. The sensor plane has a front surface which is the surface through which or from which the antennas transmit or could transmit millimeter waves. The sensor may comprise a plurality of antennas. The main emission direction of the sensor is perpendicular to the front surface of the sensor and to the sensor plane.

The term "a plurality" in this context refers to more than one antenna. This means that the millimeter wave sensor includes multiple transmitting and receiving antennas. The transmitting and receiving antennas are for example cavity antennas, which are based on resonant cavities. These antennas are designed as point-like resonators and may use a quadratic resonator design, where the electromagnetic waves resonate within a square or rectangular cavity structure. For example, these antennas may be formed by two conductor traces in two planes of a circuit board. In one plane a conductor may have an endpoint, for example a straight line ending in the plane or ending in a via (an electrical connection between two or more metal layers of a printed circuit boards). In a second plane of the circuit board parallel to the first plane a rectangular conductor may be formed that is place above the endpoint of the conductor of the first plane of the circuit board. This arrangement forms a quadratic resonator that acts as an antenna for millimmeter waves. Preferably, the endpoint of the conductor in the first plane is opposite to the center of the area defined by the conductor in the second plane.

These antennas do not have a defined polarization plane, unlike planar antennas, and rely on the resonant properties of the cavity (formed between the two conductors of the two planes of the circuit board) for efficient signal transmission and reception. The main emission direction of such an antenna is perpendicular the plane defined by the rectangular conductor and therefore also perpendicular to the plane defined by the circuit board.

For example, the antennas are arranged in the same plane and perpendicular to each other. For example, the circuit boards of the antennas are arranged in one plane.

The millimeter wave sensor is arranged in a sensor plane. The sensor plane is the plane in which the millimeter wave sensor is located.

For receiving antennas, the effective aperture corresponds to the region through which the antennas interact with the electromagnetic field. The millimeter wave sensor is arranged at a near-field distance from a support plane, meaning that the distance between the millimeter wave sensor and the support plane is small enough to enable effective transmission and reception of signals within the near-field volume. Within the near field the sensor may resolve distinct wave fronts, in particular from reflected waves. Thus, in the near field, the receiving antennas receive distinct responses with respect to an emitted signal. Receiving distinct response with respect to one signal allows to resolve three dimensional image from the responses. In contrast, in the far-filed the wave fronts would be superposed and form a single reflection signal.

The plurality of antennas may be arranged in one plane such as the sensor plane. In one example, if the plurality of antennas is arranged on a common circuit board the sensor plane is the plane of the circuit board. The device may comprise more than one sensor. For example, the front surfaces of the sensors are in the sensor plane, i.e. aligned with the sensor plane.

The plurality of antennas within a sensor may be arranged in a 3-dimensional arrangement. In this example, the mass of gravity of the antennas is in the sensor plane, while the sensors extend in the sensor plane or parallel to the sensor plane. In this example, the sensor plane may be a plane parallel to a front surface of the sensor.

The transmitting and receiving antennas together may span a surface within the sensor plane. The antenna lines may not be arranged in parallel but are preferably oriented at a 90° angle to each other. This configuration enables the capture of two-dimensional images, as signals are transmitted and received along two perpendicular directions, enhancing spatial resolution. This is for example disclosed in detail in WO 2021 1371 91 A1.

It is to be understood that millimeter wave sensors primarily extend in two perpendicular spatial directions while extending in the third spatial direction perpendicular to the other two directions in an amount that is smaller than in the first two directions. The extension plane of the sensors is the plane spanned by the first two directions, i.e. the extension plane of the sensor is spanned by the two main extension directions of the sensor. For example, a two-dimensional sensor substantially extends in two directions. In particular, the sensor plane is a plane parallel to the front surface of the sensor. The front surface of the sensor emitting millimeter waves is called aperture. For receiving antennas the aperture is the front surface of the sensors through which the antennas theoretically would transmit if used as transmitting antennas. Therefore, the aperture is the front surface of the sensor thorough which or from which the antennas transmit or could transmit millimeter waves. The millimeter wave sensor is arranged in near-field distance from a support plane. The near-field distance refers to the distance between the millimeter wave sensor and the support plane, which is close enough that the millimeter wave signals can be effectively transmitted and received in the near-field volume.

Near-field in this context refers to the volume directly in front of the sensor, roughly corresponding to the size of the sensor aperture and as explained above wherein a distinct resolution of wavefront by the receiving antennas is possible. For instance, in the case of a rectangular antenna array, this would typically mean a cuboid with a base equal to the antenna array's dimensions and a depth roughly equivalent to the sum of the lengths of its edges. For example, the near-field may be the area below the sensor up to the support plane. The near-field may extend 10, 15 % beyond the sensor surface.

According to this definition the near field is considered in close proximity to the sensor.

However, this is only an optimal example, as the near-field can be understood more broadly as a region within a similar order of magnitude, such as a volume up to one, two or three, or up to ten times the dimensions of the sensor aperture. The defining characteristic of the near-field is the way it captures detailed volumetric information. Within this volume, signals from multiple antenna pairings interact with the object's surface from various directions, contributing to the formation of an image. The collected signals provide spatial information that enables the reconstruction of object features within the near-field region. In contrast, in the far-field, where the object is located at a much greater distance from the sensor, only a few specific surface elements with optimal alignment reflect the signals back. Consequently, most voxels in the far-field appear dark or unresponsive, as is typical for applications like flight or automotive radar systems.

The observation volume extends beyond the near-field volume. The observation volume refers to the volume from which signals, in particular interference signals, can influence the reconstruction of the images. The object to be imaged is positioned on the support plane when imaged. The support plane is the surface on which the object is placed for imaging.

The reconstruction volume wherein the image is to be reconstructed from phase and/or intensity information derived from the millimeter wave data received by the receiving antennas of the sensors is part of the observation volume. The reconstruction volume is in the near field distance from the sensors. The reconstruction volume refers to the volume that is reconstructed. The object that is to be imaged is placed in the reconstruction volume. The reconstruction volume may only comprise a part of the object. The reconstruction volume may be a slice comprising part of the object. Accordingly, the reconstructed image may be a two-dimensional slice of the image or a three dimensional image.

The device also includes a processing unit. The processing unit is configured to receive the millimeter wave data from the millimeter wave sensor and process the millimeter wave data to generate spatially resolved information about the reconstruction volume of the object. The spatially resolved information provides a detailed view of the object within the reconstruction volume, allowing for a thorough inspection of the object.

The spatially resolved information about the reconstruction volume may be overlaid by interference signals or artifacts. These interfering signals or artifacts are, for example, reflections that occur in the area of the observation volume.

The processing unit may be part of a computer which is externally attached to the millimeter wave sensor. The processing unit may also be part of the sensor itself.

The surface normal of the sensor plane has a non-perpendicular angle to the support plane. The surface normal is a line that is perpendicular to the sensor plane. By tilting the sensor surface at an angle other than perpendicular to the conveyance direction of an object to be imaged, the invention minimizes reflections from metal surfaces aligned with the support plane or conveyance path of the object. This arrangement improves imaging quality and reduces artifacts, particularly by avoiding reflections from support plates or rollers in conveyor belts used to transport objects through the imaging system's reconstruction volume.

The millimeter wave imaging device provides a non-invasive method for inspecting objects in an automated processing environment. By using millimeter wave signals, the device can detect details that may not be visible to the naked eye, making it a tool for quality control and security purposes.

A sensor device may consist of one or more sensors that may have the capability to collect data in a staggered manner, or virtually simultaneously in a multiplex operation. This means they can work synchronously, functioning collectively as a large sensor. This collaborative operation of the sensors enhances the device's ability to capture comprehensive and detailed data from the object being inspected.

The millimeter wave sensor may incorporate the necessary electronics, including a System on a Chip (SoC). The SoC is a type of integrated circuit that combines all the necessary electronic components of a computer or other system on a single chip. This integration of components into a single unit enhances the efficiency and compactness of the sensor, making it more effective and easier to incorporate into the imaging device.

The image within the reconstruction volume is reconstructed based on intensity and phase information. This means that the device uses the intensity of the reflected millimeter wave signals and the phase shift that occurs when these signals are reflected off the object to generate a detailed image of the object. This method of image reconstruction provides a detailed and accurate representation of the object.

The term "spatially resolved" can refer to both 3D and 2D images. This means that the processing unit can generate three-dimensional images of the object, providing a detailed view of the object from all angles. The processing unit can also generate two-dimensional slice images or 2D projections. The 2D images can be generated without generating a 3D image beforehand. In such case the reconstruction volume may correspond to such 2D slice.

In a first implementation of the device according to the first aspect, the spatially resolved information about the reconstruction volume (R) comprises three-dimensional data and/or two-dimensional data.

The spatially resolved information about the reconstruction volume provided by the device can comprise three-dimensional data and/or two-dimensional data. This means that the device can generate a three-dimensional representation of the object within the reconstruction volume, providing a detailed view of the object from all angles. The three-dimensional data can be particularly useful for inspecting complex objects with multiple layers or components.

In addition to three-dimensional data, the device can also generate two-dimensional data about the reconstruction volume. In particular, the device can generate images of objects in the reconstruction volume. This can include two-dimensional slice images or 2D projections of the object. These two-dimensional images can provide a detailed view of specific sections or layers of the object. The 2D images, therefore, correspond to a slice through the reconstruction volume, in particular the image volume from which images are generate.

The direct capture of two-dimensional images can be beneficial in a number of ways. For instance, it can allow for a quick and efficient inspection of the object, as it eliminates the need for the time-consuming process of generating and analysing three-dimensional data. This can be particularly useful in situations where a rapid inspection of the object is required, such as in high-throughput industrial inspection scenarios.

In a further implementation of the device according to the first aspect, the device further comprises the processing unit to be configured to generate are constructed intensity volume representing the reconstruction volume (R), preferably based on the spatially resolved information about the reconstruction volume (R).

The reconstructed intensity volume is a representation of the reconstruction volume that is based on the intensity of the reflected millimeter wave signals detected by the receiving antennas. The intensity of these signals can provide information about the properties of the object within the reconstruction volume, such as its shape, size, and material composition.

The processing unit can generate the reconstructed intensity volume by processing the millimeter wave data received from the millimeter wave sensor. This processing can involve various computational techniques, such as tomographic reconstruction algorithms, to convert the raw millimeter wave data into a three-dimensional representation of the reconstruction volume.

The reflected millimeter wave signals are integral to the generation of the reconstructed intensity volume. These reflections are the result of the millimeter wave signals interacting with the object within the reconstruction volume. When these signals encounter the object, they are reflected back towards the receiving antennas of the device. The intensity of these reflected signals can vary depending on the properties of the object, such as its shape, size, and material composition.

The processing unit of the device is configured to utilize these reflections to generate the reconstructed intensity volume. It does this by processing the millimeter wave data received from the millimeter wave sensor, which includes the intensity information of the reflected signals. This processing can involve various computational techniques, such as tomographic reconstruction algorithms, which are capable of converting the raw millimeter wave data, including the reflection information, into a three-dimensional representation of the reconstruction volume.

In a further implementation of the device according to the first aspect, the processing unit is further configured to reconstruct one or more two-dimensional cross-sectional images or two-dimensional projection images from the intensity volume.

The processing unit of the device may also be configured to reconstruct one or more two-dimensional cross-sectional images or two-dimensional projection images from the intensity volume. This means that the processing unit can take the three-dimensional intensity volume and generate two-dimensional images that represent specific cross-sections or projections of the object within the reconstruction volume.

A cross-sectional image is a two-dimensional image that represents a slice or section of the object along a particular plane. A projection image, on the other hand, is a two-dimensional image that represents a projection of the object onto a particular plane. The user can choose to generate cross-sectional images, projection images, or both, depending on the specific requirements of the inspection task.

The generation of two-dimensional images from the intensity volume can be achieved through various computational techniques, such as tomographic reconstruction algorithms.

In a further implementation of the device according to the first aspect, during use, the object to be imaged moves in a transport plane (T).

The term "during use" refers to the operating condition which is a state in which the millimeter wave imaging device is functioning. This also includes the imaging of the object.

In a practical application of the millimeter wave imaging device, the object to be imaged moves in a transport plane during use. This transport plane is typically parallel to the support plane on which the object is positioned. The movement of the object in the transport plane can be facilitated by a conveyor system or other automated transport mechanism, which is common in automated processing environments such as logistics centers.

The movement of the object in the transport plane allows for continuous imaging of the object as it passes through the reconstruction volume of the millimeter wave sensor. This enables the device to capture a series of images that represent different sections or views of the object. The movement of the object in the transport plane can be controlled to ensure that the object passes through the reconstruction volume at a consistent speed and orientation.

In a further implementation of the device according to the first aspect, the processor is further configured to adjust the image processing of the millimeter wave data based on the non-perpendicular angle (a) between the surface normal of the sensor plane and the support plane.

The surface normal of the sensor plane is a line that is perpendicular to the sensor plane, while the support plane is the surface on which the object is placed for imaging. The non-perpendicular angle between the surface normal of the sensor plane and the support plane refers to the angle that is not a right angle.

The adjustment of the image processing based on this non-perpendicular angle can involve various computational techniques. For instance, the processor can apply geometric transformations to the millimeter wave data to account for the non-perpendicular angle.

The ability to adjust the image processing based on the non-perpendicular angle allows the device to generate accurate images of the object, regardless of the specific orientation of the sensor or the sensor plane.

In a further implementation of the device according to the first aspect, the processor is further configured to apply an angular correction algorithm to the millimeter wave data based on the angle (a) between the surface normal of the sensor plane and the support plane.

The angular correction algorithm is a computational method that adjusts the millimeter wave data to account for the angle between the surface normal of the sensor plane and the support plane. This angle, which is not a right angle, can affect the way the millimeter wave signals interact with the object and the way these signals are detected by the receiving antennas.

The angular correction algorithm can involve various mathematical operations that adjust the millimeter wave data to account for this angle. For instance, the algorithm can apply geometric transformations to the data, such as rotation or scaling, to correct for the effects of the angle. The algorithm can also adjust the phase and amplitude of the millimeter wave signals to account for the angle.

By correcting for the angle between the surface normal of the sensor plane and the support plane, the algorithm ensures that the images generated by the device accurately represent the object within the reconstruction volume.

In a further implementation of the device according to the first aspect, the device further comprises a sensor frame on which at least one sensor is mounted.

The sensors can be mounted on the sensor frame such that the sensors are arranged in the same plane, for example a plane defined by a rectangular frame. Further, in case the device comprises a plurality of sensors, the sensors may be divided into at least two groups. Each of the groups of sensors may be arranged in one plane. For example, two groups of sensors may be arranged in two planes wherein the planes are inclined or tilted to one another. Each group of sensors may comprise only one sensor. Each groups of sensors may comprise a plurality of sensors.

The sensor frame serves as a support structure for the sensor or sensors, providing a stable and secure platform for the sensors to operate.

The sensor frame can be designed to accommodate one or more sensors, allowing for the configuration of the device to be adjusted based on the specific requirements of the inspection task. For instance, additional sensors can be added to the frame, or existing sensors can be repositioned on the frame to alter the observation volume. Altering the observation volume allows to adapt the device to the particular use case. The provision of additional sensors likewise allows to adapt the reconstruction volume to the particular use case. For example, the observation and/or reconstruction volume may be adapted to the size of the object. Altering the observation volume and/or the reconstruction volume also allows to better capture objects by avoiding shadowing effects or to increase the spatial resolution.

The sensor frame can be made from a variety of materials, including but not limited to metal, plastic, or composite materials. The choice of material can depend on various factors, such as the weight and durability requirements of the device, as well as the environmental conditions in which the device is expected to operate.

The sensor frame can also include various features to facilitate the mounting and alignment of the sensors. For instance, the frame can include mounting brackets or slots to secure the sensors in place, as well as alignment marks or guides to ensure that the sensors are positioned correctly.

In a further implementation of the device according to the first aspect, the sensor frame being arranged such that:
the sensor frame being arranged parallel to the support plane, or
the sensor frame being tilted at an angle relative to the support plane.

The sensor frame of the millimeter wave imaging device can be arranged in a manner such that it is either parallel to the support plane or tilted at an angle relative to the support plane.

When the sensor frame is arranged parallel to the support plane, the sensors mounted on the frame are positioned in a way that they directly face the object placed on the support plane.

On the other hand, when the sensor frame is tilted at an angle relative to the support plane, the sensors are positioned in a way that they face the object at an angle.

In a further implementation of the device according to the first aspect, the device further comprises at least two sensors, and wherein each sensor is arranged in a sensor plane (S1a, S1b,..., S1n).

The millimeter wave imaging device may further comprise at least two sensors, with each sensor arranged in a sensor plane. By distributing multiple sensors within the sensor plane or across different sensor planes, the system may enhance coverage, improve spatial resolution, or enable multi-perspective imaging. This configuration allows for multiple sensors to operate simultaneously, capturing complementary data from different positions or angles, which can be combined to improve overall image quality and accuracy.

Each sensor plane is the plane in which a respective sensor is located. The sensor plane can be oriented in various ways depending on the specific requirements of the inspection task. For instance, the sensor planes can be parallel to each other, or they can be oriented at different angles.

In a further implementation of the device according to the first aspect, the sensors provide data to the processor by multiplexing the data.

Multiplexing does not primarily refer to the theoretical aspect of simultaneous data transmission along a single pathway - although this aspect may also be included. Instead, it relates to ensuring the serialized capture of the moving object by all sensors, minimizing motion-induced discrepancies between partial captures. This serialization allows the partial data to be seamlessly correlated and assembled into a coherent image. Multiplexing in this context refers to multiple sensors capturing the same scene, i.e. the observation volume with respect to each sensor is identical or at least overlaps. Identical in this context means that the observation volumes are as similar as possible taking into account the spatial separation of the sensors and the temporal separation due to the multiplexing.

A notable feature in this system is that the sensors operate in phase synchronization. This enables each receiving antenna to measure the phase shift relative to the signal from every transmitting antenna in the system. This approach effectively increases the number of usable antenna pairings, providing significantly more information about the scene than would be possible with simpler time-multiplexing schemes where only transmitter-receiver pairs within each sensor are evaluated. The result is enhanced resolution and clearer, more detailed image data.

By allowing multiple sensors to transmit their data simultaneously, multiplexing can reduce the amount of time it takes for the processor to receive and process the data from all the sensors.

Furthermore, multiplexing can also reduce the complexity of the device's data communication system. By combining multiple signals into one, multiplexing can reduce the number of data pathways needed in the device, simplifying the design of the device's data communication system.

In a further implementation of the device according to the first aspect, the two or more sensors being arranged such that:
- at least one sensor is tilted with respect to the at least one other sensor.
- all surface normals of the sensor planes (S1a, ..., S1n) are tilted at the same angle relative to the support plane, or
- the surface normals of the sensor planes (S1a, ..., S1n) are tilted at different angles (a, b, c, d) relative to the support plane.

The millimeter wave imaging device may comprise two or more sensors arranged in such a way that at least one sensor is tilted with respect to the at least one other sensor.

In addition, all surface normals of the sensor planes may be tilted at the same angle relative to the support plane. The surface normal is a line that is perpendicular to the sensor plane. By tilting all surface normals at the same angle, the device can maintain a consistent orientation across all sensors. The surface normals of the sensors may be parallel to each other but tilted with respect to the transport plane. The surface normals of the sensor planes may be skewed with respect to each other. The surface normal of the sensors can be arranged symmetrically. Preferably, the symmetrically arranged sensor planes are rotationally symmetric. For example, the sensors are arranged such that the projection of the centers of the sensors front surface onto the support plane form a unit circle, i.e. in the projection in the support plane the sensors surfaces.

In a further implementation of the device according to the first aspect, the sensors being arranged such that:
- the angle between the surface normal of the sensor plane and the support plane is adjustable in real-time, and
- the processor is further configured to apply an angular correction algorithm to the millimeter wave data, wherein the algorithm automatically adjusts based on real-time changes in the angle between the surface normal of the sensor plane and the support plane.

The millimeter wave imaging device may feature an adjustable angle between the surface normal of the sensor plane and the support plane in real-time. This means that the orientation of the sensor plane relative to the support plane is to be dynamically adjusted while the device is in operation.

Furthermore, the processor of the device is configured to apply an angular correction algorithm to the millimeter wave data. This algorithm is designed to adjust the millimeter wave data based on real-time changes in the angle between the surface normal of the sensor plane and the support plane. This means that the algorithm can dynamically adjust the millimeter wave data as the angle changes, ensuring that the images generated by the device represent the object within the reconstruction volume, regardless of the current angle between the sensor plane and the support plane.

In a further implementation of the device according to the first aspect, the surface of the sensor on which the antennas are arranged has a concave or convex shape.

The sensor of the millimeter wave imaging device may have a concave or convex shape. This refers to the physical form of the sensor, which can be curved inward (concave) or outward (convex) rather than being flat.

A concave sensor has a surface that curves inward, like the inside of a bowl. This shape can help to focus the millimeter wave signals onto a specific point or area within the reconstruction volume, enhancing the sensor's ability to capture detailed images of the object.

A convex sensor, on the other hand, has a surface that curves outward, like the outside of a bowl. This shape can help to spread the millimeter wave signals over a wider area within the reconstruction volume, enhancing the sensor's ability to capture a comprehensive view of the object.

In a further implementation of the device according to the first aspect, antennas are arranged three dimensionally within the sensor.

The millimeter wave imaging device may feature antennas that are arranged three-dimensionally within the sensor. This means that the antennas, which are responsible for emitting and receiving the millimeter wave signals, are not confined to a single plane but are distributed in a three-dimensional space within the sensor.

The three-dimensional arrangement of antennas can also enhance the resolution of the images generated by the device. By capturing millimeter wave data from multiple points in space, the device can generate images with a higher level of detail.

The three-dimensional arrangement of antennas can be achieved through various means. For instance, the antennas can be embedded within the material of the sensor, or they can be mounted on a three-dimensional structure within the sensor.

In a further implementation of the device according to the first aspect, wherein the main emission direction of the sensors is perpendicular to the surface of the sensors, and the tilting is oriented such that reflections are deflectect from the main emission direction.

A second aspect of the invention provides a millimeter wave inspection system for inspecting objects on a transport mechanism in an automated processing environment, in particular a logistics environment, the inspection system comprising:
- a transport mechanism configured to transport objects to be imaged,
- wherein the object is positioned on an support surface of the transport mechanism plane when imaged,
- wherein the object is positioned on the support plane (S2) in an reconstruction volume (R) in an observation volume (V) when imaged,
- a millimeter wave sensor providing millimeter wave data,
- wherein the millimeter wave sensor is arranged in a sensor plane (S1),
- wherein the millimeter wave sensor comprises a plurality of transmitting antennas configured to emit millimeter wave signals and receiving plurality of antennas configured to detect reflections of the emitted millimeter wave signals from within an observation volume (V),
- wherein the sensor plane (S1) is in near-field (NF) distance to the support surface,
- wherein the millimeter wave sensor is mounted to the transport mechanism such that the surface normal of the sensor plane (S1) has a non-perpendicular angle (a) to the support plane (S2)

The invention pertains to a millimeter wave inspection system for inspecting objects on a transport mechanism in an automated processing environment, particularly a logistics environment. The inspection system comprises a transport mechanism configured to transport objects to be imaged. The object is positioned on a support surface of the transport mechanism plane when imaged. The object is further placed on a support plane (S2) in a reconstruction volume (R) in the observation volume (V) when imaged. The support plane (S2) is part of the support surface.

Near-field in this context refers to the volume directly in front of the sensor, roughly corresponding to the size of the sensor aperture. For instance, in the case of a rectangular antenna array, this would typically mean a cuboid with a base equal to the antenna array's dimensions and a depth roughly equivalent to the sum of the lengths of its edges. For example, the near-field may be the area below the sensor up to the support plane. The near-field may extend 10, 15 % beyond the sensor surface in any direction.

According to this definition the near field is considered in close proximity to the sensor.

However, this is only an optimal example, as the near-field can be understood more broadly as a region within a similar order of magnitude, such as a volume up to one, two or three, or up to ten times the dimensions of the sensor aperture.

The observation volume extends beyond the near-field volume. The observation volume refers to the volume from which signals, in particular interference signals, can influence the reconstruction of the images. The object to be imaged is positioned on the support plane when imaged. The support plane is the surface on which the object is placed for imaging.

The reconstruction volume wherein the intensity is to be reconstructed from the millimeter wave data received by the receiving antennas of the sensors is part of the so called observation volume. The reconstruction volume is in the near field distance from the sensors. The reconstruction volume refers to the volume that is reconstructed. The object that is to be imaged is placed in the reconstruction volume.

The system also includes a millimeter wave sensor that provides millimeter wave data. The millimeter wave sensor is arranged in a sensor plane and comprises a plurality of transmitting antennas configured to emit millimeter wave signals and a plurality of receiving antennas configured to detect reflections of the emitted millimeter wave signals from within an observation volume.

Preferably, the millimeter wave sensor is a millimeter wave sensor according to the first aspect of the invention.

The sensor plane is in near-field distance to the support surface. The reconstruction volume, which is part of the observation volume, is a usually cubic, three-dimensional space on the support surface. The reconstruction volume can for example be a cuboid or an arbitrary volume within the observation volume from which the images are reconstructed. The millimeter wave sensor is mounted to the transport mechanism such that the surface normal of the sensor plane has a non-perpendicular angle to the support surface. The support plane is part of the support surface.

By tilting the sensor surface at an angle other than perpendicular to the conveyance direction, the invention minimizes reflections from metal surfaces aligned with the support plane or conveyance path. This improves imaging quality and reduces artifacts, particularly by avoiding reflections from support plates or rollers in conveyor belts used to transport objects through the imaging system's reconstruction volume.

The transport mechanism can be any device or system that moves objects from one location to another within the automated processing environment. This could include conveyor belts, robotic arms, or other types of automated transport systems.

The support surface of the transport mechanism is the surface on which the object is placed for imaging. This surface is typically flat and stable, ensuring that the object remains in a consistent position as it is transported through the system. In practice, the support surface may not be perfectly level. It can sag due to the underlying metal rollers or metal plates. This sagging causes the rollers or plates to reflect light at angles deviating from vertical, depending on the degree of sagging. As a result, even rollers or plates that are not directly beneath the sensor can contribute to unwanted reflections and interference signals. Tilting the sensors prevents these reflections, caused by the sagging, from reaching the sensor. In particular, when the sensor tilt is greater than the angle deviation from the vertical caused by the sag.

Another approach to address this issue is to use absorbers placed at the edges of the sensor or in the transmission path of the unwanted reflections from outside the reconstruction volume. The absorber may comprise materials that particularly absorb the millimeter waves emitted by the sensors. The absorber may for example be thick rubber or a rubber mat. These absorbers effectively dampen unwanted reflections. Additionally, absorber sheets can be installed on the transport belt to further minimize reflections. However, this method has the drawback of requiring the transport belt or conveying system to be stopped for adjustments, which may disrupt operations.

The millimeter wave sensor is a key component of the system, responsible for emitting millimeter wave signals and detecting their reflections from the object. The sensor is arranged in a sensor plane, which is the plane in which the sensor extends. For example, the sensor plane may be parallel to the front surface of the sensor, in particular when the front (back) surface is the largest surface of the sensor. The sensor plane may the plane in which the antennas of the sensor are placed or located at. In the case of a complex sensor which may be used in all aspects of the invention, wherein the antennas within the sensor may be arranged on a curved surface, for example a concave or convex surface, the sensor plane is defined as the linear interpolation of the positions of the transmitting and receiving antennas of a sensor.

The sensor plane is positioned in near-field distance to the support surface, ensuring that the millimeter wave signals can effectively reach the object and their reflections can be accurately detected by the sensor.

The observation volume is the three-dimensional space within which the millimeter wave sensor can detect reflections of the emitted millimeter wave signals. This volume extends from the sensor plane to the support surface and beyond, encompassing the entire space within which the object is located. The object to be imaged in placed in a reconstruction volume which is a volume inside the observation volume.

The millimeter wave sensor is mounted to the transport mechanism in such a way that the surface normal of the sensor plane has a non-perpendicular angle to the support surface. The surface normal is a line that is perpendicular to the sensor plane. The non-perpendicular angle between the surface normal and the support surface reduces the reflexion caused by reflecting surfaces in the transport system such as metal belts or rollers.

In a further implementation of the system of the second aspect, the system is configured to generate spatially resolved information about the reconstruction volume (R).

In a further implementation of the system of the second aspect as such or according to the first implementation of the second aspect, the spatially resolved information about the reconstruction volume (R) comprise three-dimensional data and/or two-dimensional data.

In a further implementation of the system of the second aspect as such or according to the first implementation of the second aspect, the system further comprises the processing unit to be configured to generate an intensity volume representing the reconstruction volume (R), preferably based on the spatially resolved information about the reconstruction volume (R).

In a further implementation of the system of the second aspect as such or according to the first implementation of the second aspect, the processing unit is further configured to reconstruct one or more two-dimensional cross-sectional images or two-dimensional projection images from the intensity volume.

In a further implementation of the system of the second aspect as such or according to the first implementation of the second aspect, the distance between the millimeter wave sensor and the support surface is adjustable.

The system may feature an adjustable distance between the millimeter wave sensor and the support surface. This means that the separation between the sensor and the surface on which the object is placed for imaging can be dynamically adjusted while the system is in operation.

In a further implementation of the system of the second aspect as such or according to the first implementation of the second aspect, the angle between the surface normal of the sensor plane and the support surface is adjustable.

The system may feature an adjustable angle between the surface normal of the sensor plane and the support surface. This means that the orientation of the sensor plane relative to the support plane can be dynamically adjusted while the system is in operation. The surface normal is a line that is perpendicular to the sensor plane. The angle between the surface normal and the support plane determines the direction in which the millimeter wave signals are emitted and received by the sensor.

In a further implementation of the system of the second aspect as such or according to the first implementation of the second aspect, wherein the sensor has a concave or convex shape.

In a further implementation of the system of the second aspect as such or according to the first implementation of the second aspect wherein the transport mechanism is a conveyor belt.

A further aspect of the invention refers to a computer-readable storage medium storing program code, the program code comprising instructions that when executed by a processor carry out the method of the second aspect or one of the implementations of the second aspect.

A third aspect of the invention provides a method for producing a millimeter wave image of an object in an automated processing environment, in particular a logistics environment, the method comprising the steps of:
- providing a millimeter wave sensor,
- wherein the millimeter wave sensor comprises a plurality of transmitting antennas configured to emit millimeter wave signals and a plurality receiving antennas configured to detect reflections of the emitted millimeter wave signals from within an observation volume (V),
- wherein the sensor is arranged at a sensor plane (S1),
- moving the object on a path along a transport plane (T),
- positioning the object on a support plane (S2) in an reconstruction volume (R) in the observation volume (V),
   - wherein the surface normal of the sensor plane (S1) has a non-perpendicular angle to the support plane (S2),
   - processing the millimeter wave data to generate spatially resolved information about the reconstruction volume (R) of the object based on the millimeter wave data generated by the sensor.

The invention also relates to a method for producing a millimeter wave image of an object in an automated processing environment, particularly a logistics environment. The method involves several steps, starting with the provision of a millimeter wave sensor. This sensor comprises a plurality of transmitting antennas configured to emit millimeter wave signals and a plurality of receiving antennas configured to detect reflections of the emitted millimeter wave signals from within an observation volume.

The method typically operates within a frequency of between 50GHz and 80GHz. The method can operate at frequencies up to 600 GHz or 800 GHz.

The term "a plurality" in this context refers to more than one antenna. This means that the provided millimeter wave sensor includes multiple transmitting and receiving antennas.

The method involves arranging the sensor at a sensor plane. The object to be imaged is moved along a path on a transport plane, such as a conveyor belt or other transport mechanism. The object is positioned on a support plane, which is in near-field distance to the sensor plane.

Near-field in this context refers to the volume directly in front of the sensor, roughly corresponding to the size of the sensor aperture. For instance, in the case of a rectangular antenna array, this would typically mean a cuboid with a base equal to the antenna array's dimensions and a depth roughly equivalent to the sum of the lengths of its edges. However, this is only an optimal example, as the near-field can be understood more broadly as a region within a similar order of magnitude, such as a volume up to three times the dimensions of the sensor aperture.

The defining characteristic of the near-field is the way it captures detailed volumetric information. Every point within this volume is observed by numerous antenna pairings from various directions. This dense sampling ensures that for at least one pairing, the object's surface reflects the millimeter waves, resulting in a brightness value for the corresponding voxel. In contrast, in the far-field, where the object is located at a much greater distance from the sensor, only a few specific surface elements with optimal alignment reflect the signals back. Consequently, most voxels in the far-field appear dark or unresponsive, as is typical for applications like flight or automotive radar systems.

The observation volume extends from the surface of the sensor at least to the support plane in front and below the sensor. The observation volume extends beyond the near-field volume. The observation volume is the space within which the millimeter wave sensor can detect reflections of the emitted millimeter wave signals. The object to be imaged is positioned on the support plane when imaged. The support plane is the surface on which the object is placed for imaging.

The reconstruction volume wherein the intensity is to be reconstructed from the millimeter wave data received by the receiving antennas of the sensors is part of the observation volume. The reconstruction volume is in the near field distance from the sensors. The reconstruction volume refers to the volume that is reconstructed. The object that is to be imaged is placed in the reconstruction volume.

The surface normal of the sensor plane has a non-perpendicular angle to the support plane.

The method includes to process the millimeter wave data from the millimeter wave sensor to generate spatially resolved information about the reconstruction volume (R) of the object based on the millimeter wave data generated by the sensor.

This involves configuring the processing unit to receive the millimeter wave data from the millimeter wave sensor and process the millimeter wave data to generate spatially resolved information about the reconstruction volume of the object. The spatially resolved information provides a detailed view of the object within the reconstruction volume, allowing for a thorough inspection of the object.

The processing unit may be part of a computer which is externally attached to the millimeter wave sensor. The processing unit may also be part of the sensor itself.

The millimeter wave data generated by the sensor is processed to generate spatially resolved information about the reconstruction volume of the object. This processing can involve various image processing techniques and algorithms, which can adjust the millimeter wave data based on the angle between the surface normal of the sensor plane and the support plane, among other factors.

The resulting spatially resolved information provides a detailed view of the object, allowing for a thorough inspection of the object. This can be particularly beneficial in a logistics environment, where the method can be used to inspect packages for contraband, hazardous materials, or other items of interest.

The spatially resolved reconstruction volume of the object may be disturbed by artifacts or interfering signals. These interfering signals could, for example, be reflections that occur in the observation volume, in particular caused by reflections outside the reconstruction volume. Thus, these reflections and disturbances in the observation volume influence the reconstruction of the spatially resolved image of the reconstruction volume.

In a further implementation of the method of the third aspect, the spatially resolved information about the reconstruction volume (R) comprises three-dimensional data and/or two-dimensional data.

The spatially resolved information about the reconstruction volume (R) generated by the method can comprise three-dimensional data and/or two-dimensional data. This means that the method can generate three-dimensional images of the object, providing a detailed view of the object from various angles. The method can also generate two-dimensional slice images or 2D projections. The two-dimensional images can be reconstructed without the reconstruction of a three-dimensional image.

The three-dimensional data can provide a volumetric representation of the object, allowing for a detailed analysis of the object's shape, size, and other physical characteristics. The two-dimensional data can provide a cross-sectional view or a projection view of the object.

In a further implementation of the method of the third aspect, the processing further comprises to generate an intensity volume representing the reconstruction volume (R), preferably based on the spatially resolved information about the reconstruction volume (R).

The processing step of the method can further comprise generating an intensity volume representing the reconstruction volume. This intensity volume is preferably based on the spatially resolved information about the reconstruction volume.

The intensity volume can be generated based on the spatially resolved information about the reconstruction volume. This means that the intensity volume can provide a detailed view of the object that is consistent with the spatially resolved information.

The intensity volume provides a representation of the reconstruction volume based on the intensity of the reflected millimeter wave signals.

Areas of the object that reflect millimeter wave signals with a high intensity may indicate the presence of certain materials or features, while areas that reflect the signals with a low intensity may indicate the presence of other materials or features.

In a further implementation of the method of the third aspect, the processing further comprises to reconstruct one or more two-dimensional cross-sectional images or two-dimensional projection images from the intensity volume.

The processing step of the method can further comprise reconstructing one or more two-dimensional cross-sectional images or two-dimensional projection images from the intensity volume.

The reconstruction of two-dimensional images from the intensity volume can be achieved through various image reconstruction techniques. These techniques can involve the use of algorithms that process the intensity data to generate two-dimensional images that accurately represent the object.

In a further implementation of the method of the third aspect, the processing further comprises processing of the millimeter wave data based on the non-perpendicular angle (a) between the surface normal of the sensor plane (S1) and the support plane (S2).

The processing step of the method can further comprise processing of the millimeter wave data based on the non-perpendicular angle between the surface normal of the sensor plane and the support plane.

The non-perpendicular angle between the surface normal of the sensor plane and the support plane can affect the way the millimeter wave signals are reflected from the object and detected by the receiving antennas. This, in turn, can affect the millimeter wave data that is generated by the sensor and processed by the processor to generate spatially resolved information about the observation volume of the object.

The processor's ability to adjust the image processing based on the non-perpendicular angle can enhance the accuracy and reliability of the spatially resolved information generated by the method. By taking into account the non-perpendicular angle, the processor can adjust the image processing to compensate for any distortions or anomalies in the millimeter wave data that may be caused by the angle.

The adjustment of the image processing based on the non-perpendicular angle can involve various image processing techniques and algorithms. For example, the processor can adjust the image processing to compensate for the angle by applying a correction factor to the millimeter wave data. The correction factor can be determined based on the non-perpendicular angle and can be used to adjust the millimeter wave data to account for the effects of the angle on the reflections of the millimeter wave signals.

In a further implementation of the method of the third aspect, the step of processing the millimeter wave data includes applying an angular correction algorithm based on the non-perpendicular angle (a) between the surface normal of the sensor plane (S1) and the support plane (S1).

In the method, the step of processing the millimeter wave data includes applying an angular correction algorithm based on the non-perpendicular angle between the surface normal of the sensor plane and the support plane.

The angular correction algorithm may be designed to adjust the processing of the millimeter wave data based on the angle between the surface normal of the sensor plane and the support plane. This angle can affect the way the millimeter wave signals are reflected from the object and detected by the receiving antennas, which can in turn affect the millimeter wave data that is generated by the sensor. By applying the angular correction algorithm, the processor can adjust the millimeter wave data to compensate for any distortions or anomalies that may be caused by the angle.

The angular correction algorithm can involve various mathematical operations and transformations that are designed to adjust the millimeter wave data based on the angle. For example, the algorithm can apply a spatially dependent correction factor to the millimeter wave data, where the correction factor is determined based on the angle. Spatially dependent in this context means that the correction factor may be determined individually for each sensor and in accordance with the sensors individual position. The algorithm can also adjust the millimeter wave data to account for the effects of the angle on the reflections of the millimeter wave signals.

In a further implementation of the method of the third aspect, the method further comprises the step of synchronizing the image acquisition process with an adjustment of the angle (a) between the sensor plane (S1) and the support plane (S2).

The method can further comprise the step of synchronizing the image acquisition process with an adjustment of the angle between the sensor plane and the support plane. The adjustment of the angle between the sensor plane and the support plane can be performed in real-time, allowing the angle to be dynamically adjusted based on changes in the object's position or orientation, or based on different inspection requirements.

The synchronization can be achieved through various techniques. For example, the method can include a feedback loop that continuously monitors the angle between the sensor plane and the support plane and adjusts the image acquisition process accordingly. Alternatively, the method can include a predictive algorithm that anticipates changes in the angle and adjusts the image acquisition process in advance.

In a further implementation of the method of the third aspect, the method further comprises generating a three-dimensional (3D) model of the object based on the millimeter wave data.

### Brief description of the drawings

To illustrate the technical features of embodiments of the present invention more clearly, the accompanying drawings provided for describing the embodiments are introduced briefly in the following. The accompanying drawings in the following description are merely some embodiments of the present invention, modifications on these embodiments are possible without departing from the scope of the present invention as defined in the claims.
- Fig. 1: shows a schematic prior art imaging system;
- Fig. 2a-c: show reflections occurring in the prior art system and the solution of the prior art system;
- Fig. 3: shows a millimeter wave imaging device according to the present disclosure;
- Fig. 4a,b: show a millimeter wave imaging device according to the present disclosure with a tilted sensor and conveyor belt with metal rollers in a front and side view;
- Fig. 5a-c: show a millimeter wave imaging device according to the present invention with four sensors in a top view and an arrangement with two sensors in a top and a front view;
- Fig. 6a-c: show a front view of a prior art sensor and a tilted sensor according to the present invention and the respective orientation of the corresponding Cartesian coordinate system of the observation volume;
- Fig. 7: shows a millimeter wave imaging device according to the present invention;
- Fig. 8: shows a millimeter wave imaging device according to the present invention attached to a transport system;
- Fig. 9: shows the regions where artifacts are caused and appear;
- Fig. 10: shows the observation volume, the near-field volume and the reconstruction volume.

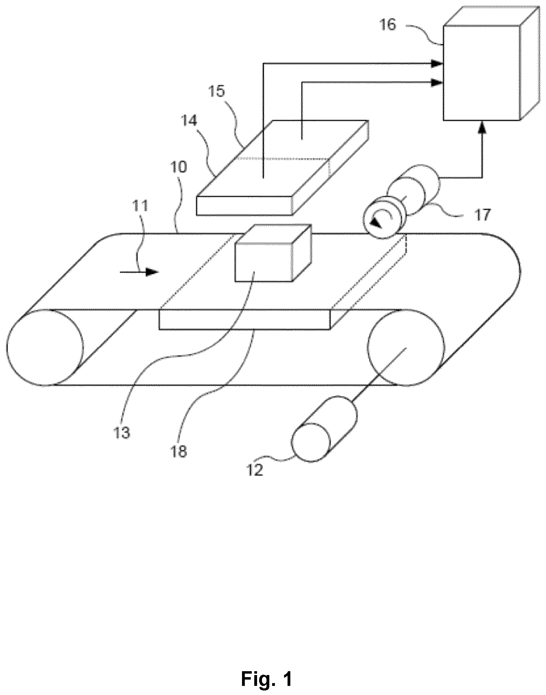

Fig. 1 shows a schematic prior art imaging system. A transport system with a support surface 10 is configured to move objects 13 on a transport plane along a transport direction 11. The transport system may for example comprise a conveyor belt comprising metal plates 18. The surface of the conveyor belt may move along the transport direction 11 in the transport plane. The transport system further comprises a drive unit 12 to drive the transport system. A rotary encoder 17 controls the movement for processing and control in processing unit 16. The information provided by the rotary encoder may be used to reconstruct the images. Alternatively, there may be several rollers supporting the conveyor belt or moving objects directly. Furthermore, two millimeter wave sensors are arranged in parallel to the support surface, i.e. the surface of the sensors 14, 15 are parallel to the plane of the support surface supporting the object to be imaged. Accordingly, the preferred direction of emitted radiation is perpendicular to the support plane.

Each sensor may comprise a plurality of antennas for emitting millimeter waves and a plurality of antennas for receiving millimeter waves. The antennas are arranged in a sensor plane parallel to the front surface of the sensor. The sensors may be controlled by a processing unit. The processing unit controls the millimeter wave emission and processes the received millimeter wave data from the receiving antennas. The processing unit may further process the millimeter wave data in order to reconstruct a three-dimensional intensity volume. The processor may also use the information on the emitted millimeter wave radiation to process the millimeter wave data.

The sensors are arranged such that the reconstruction volume is in the near field of the antennas, i.e. the volume from which data is taken by the sensors.

The processing unit 16 processes the millimeter wave data in order to reconstruct a three dimensional intensity volume within the reconstruction volume by deriving an intensity value for volume elements within the reconstruction volume. A volume element is a portion of the reconstruction volume for which an average intensity is derived. The reconstruction volume can thus be divided into the volume elements and in particular in layers of volume elements, wherein each layer forms a 2D image.

The image information derived from the millimeter wave data ca be used as input for algorithms for the purpose of material testing, completeness control, object classification, and/or object localization. The algorithms derive the information necessary for their purpose form the millimeter wave data provided by the sensor or sensors.

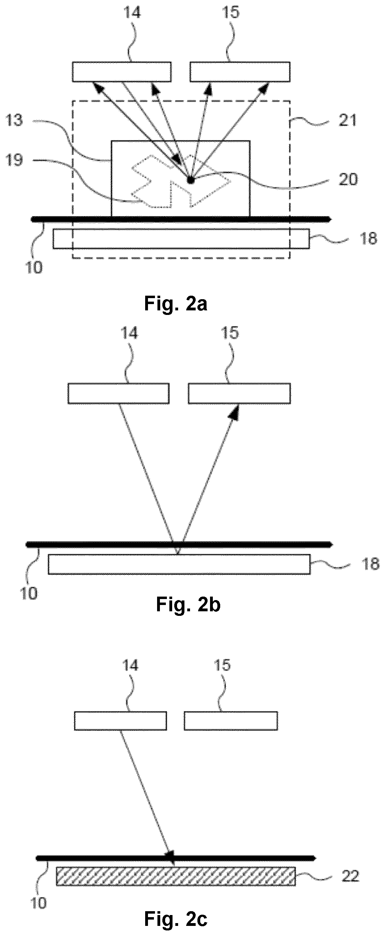

Fig. 2 shows reflections occurring in the prior art system. The sensors 14, 15 comprise emitting and receiving antennas which are arranged such that the surface of the sensors is parallel to the surface of a support surface 10. The support surface supports the object 13 and its content which are to be imaged. For example, the support surface 10 may be a conveyor belt which itself is supported by plates 18. The reconstruction volume, wherein the intensity is to be reconstructed from the millimeter wave data received by the receiving antennas of the sensors 14, 15 is part of the observation volume 21. The reconstruction area/volume is in the near field distance from the sensors 14, 15. The actual observation volume which is measured by the sensors may extend beyond the support surface and the plates supporting the exemplary conveyor belt. Reflections can occur from the entire observation volume, which disturb the reconstructed image of the reconstruction volume. As shown in fig. 2, millimeter waves emitted from sensor 14 may penetrate the object and may be reflected by the content 19 of the object 13. The reflections may be detected by a plurality of receiving antennas of sensors 14, 15. From the received millimeter waves corresponding millimeter wave data are determined, which are used by the processing unit to derive the intensity at the reflection points, for example point 20, in the reconstruction volume. Thus, the intensity at point 20 of the content 19 of the object may be reconstructed. Reconstructing the intensity at all points within the reconstruction volume allows to reconstruct 2D images, wherein a 2D image corresponds to a layer of the reconstruction volume.

The processing unit 16 may further be communicatively coupled to a determination unit for determining the movement and/or position of the transport system. The processing unit 16 may process the millimeter wave data and reconstruct the intensity in the reconstruction volume based on the movement and/or position information of the transport system. In particular, the processing unit may derive a position of the object to be imaged from the movement and/or position data.

Fig. 2b shows the refection of an emitted millimeter wave signal by a plate within a conveyor system. The metal plate supporting, for example a plate of a conveyor belt, reflects the off-axis signal emitted by sensor 14 directly towards sensor 15 and vice versa. However, radiation emitted in the preferred emission direction, i.e. along the surface normal of the sensor and perpendicular to the surface of the metal plate, would be directly reflected back towards the receiving antennas of sensor 14. As explained above, the signals from such reflection are magnitudes larger than the actual signals used for reconstructing the intensity in the reconstruction volume and therefore limit the ability of the imaging system to accurately detect and identify objects. Further, these reflections may cause false positives or negatives, also reducing the reliability of the imaging system. Additionally, these reflections can complicate the image processing algorithms, requiring more sophisticated and computationally intensive methods to filter out the unwanted signals.

The solution of the prior art is shown in Fig. 2c. The metal support plate of the transport system is replaced by a non-reflecting support plate. Accordingly, the emitted radiation which reaches the plate 22 is absorbed and not reflected. However, this solution requires to interfere with the operation of the transport system. Since the millimeter wave imaging system is typically implemented in existing systems, for example in distribution centers, in particular to conveyor systems in such centers, implementing such a solution bears the risk to interrupt the existing system causing not only severe delay and associated cost, but also liability risks. However, since the problem is caused by the metal in the existing system, it is unavoidable to interfere with these systems in order to implement the solution.

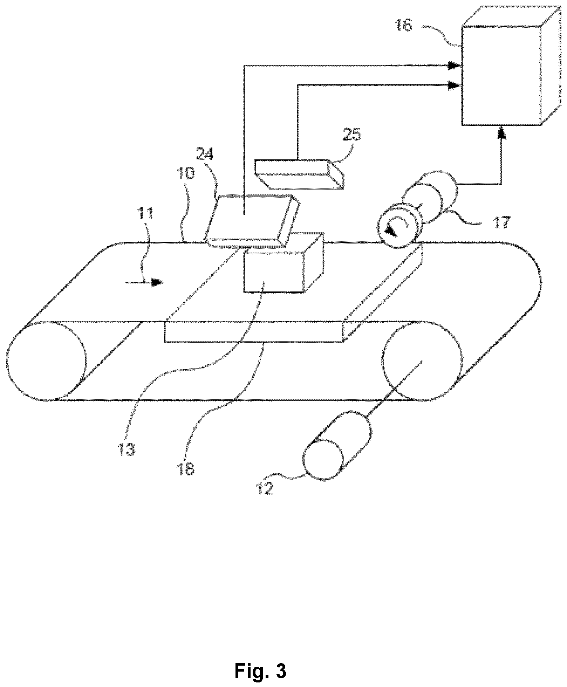

Fig. 3 shows a solution according to the present invention. A transport system with a support surface 10 is configured to move objects 13 on a transport plane or support surface along a transport direction 11. The transport system may for example comprise a conveyor belt comprising metal plates 18 to support the conveyor belt. The surface of the conveyor belt may move along the transport direction 11 in the transport plane. The transport system further comprises a drive unit 12 to drive the transport system, for example an electric motor may drive a roller which drives a conveyor belt comprising metal support plates. Alternatively, there may be several rollers supporting the conveyor belt. The processing unit 16 may control the drive unit 12. The system may further comprise a position detection unit 17, which detects the position of the surface of the transport system. The position information may be used by the processing unit to reconstruct images.

The millimeter imaging device according to the present disclosure comprises sensors 24, 25 that are tilted with respect to the support surface or transport plane of a transport system which transports an object to be imaged through reconstruction volume of the millimeter wave imaging device, i.e. the surface of the sensors 24, 25 are non-parallel to the support plane. Accordingly, the preferred direction of emitted radiation is non-perpendicular to the transport plane. It is important to note that the sensors may be rotated around any angle, as the key aspect of the invention is the tilting of the sensors, not their rotational orientation. Further, the suggested imaging device is not limited to the implementation in transport systems but can be used for imaging objects of located on any type of support surface forming a support plane as long as the surface normal of the sensors surface is not perpendicular to the support plane.

The main emission direction of the sensors is perpendicular to the surface of the sensors, and the tilting is oriented such that the reflections do not return to the sensor. The antennas of the sensors may be arranged in a plane parallel to the front surface of the sensor. The antennas may be arranged three dimensionally within the sensor.

The near-field volume of the millimeter wave imaging device is in front of the sensors 24, 25 and extends to the support plane.

The imaging system may comprise two sensors, but also only one sensor or more than two sensors. For example, four sensors to eight sensors could be used. Each sensor may comprise a plurality of antennas for emitting millimeter waves and a plurality of antennas for receiving millimeter waves. The sensors may be controlled by a processing unit. The processing unit may be a processor, a microcontroller, a controller, an embedded processor, a custom design chip (ASIC) or a field programmable gate array (FPGA). The processing unit controls the millimeter wave emission and processes the received millimeter wave data from the receiving antennas. The processing unit may further process the millimeter wave data in order to reconstruct a three-dimensional intensity volume. The processor may also use the information on the emitted millimeter wave radiation to process the millimeter wave data.

To ensure a more uniform and rotation-invariant imaging capability, the arrangement of the sensors may be designed to avoid biases caused by a single-sided perspective. For instance, by tilting one or more sensors relative to the target, the system can capture data from different angles, reducing blind spots and ensuring a more comprehensive representation of the object. This approach enhances the system's ability to reconstruct accurate three-dimensional images, even for complex geometries or orientations of the target.

The sensor may comprise the circuitry to generate the millimeter waves and to transmit and receive millimeter wave, for example drivers for the respective frequencies and circuitry to measure millimeter waves. The sensor may comprise the circuitry to drive the antennas and to detect millimeter waves. For example, the circuitry may be a system on a chip (SoC). The antennas of the sensors may be formed on flexible printed circuit boards (PCB). The sensor comprises the PCBs comprising the antennas. The antennas may be formed by or within different layers of the PCB. In the low frequency range the antennas may be separate components outside of and electrically connected to the sensor. For very high-frequency operation, the antennas may instead be integrated directly onto the SoC or housed on a module that combines the SoC and antennas into a single unit. This module can then be mounted onto the PCB as a single large component.

The sensors are arranged such that the reconstruction volume, i.e. the volume with respect to which an images in an image area shall be reconstructed, is in the near field of the antennas.

The processing unit 16 processes the millimeter wave data in order to reconstruct a three dimensional intensity volume within the reconstruction volume by deriving an intensity value for volume elements. The volume elements for which the intensity is reconstructed may form a reconstruction area or reconstruction volume. Thus, the reconstruction volume element is a portion of the observation volume for which an average intensity is derived. The volume can thus be divided into the volume elements and in particular as layers of volume elements, wherein layers of volume elements form a 2D image. The processor in particular uses the measured intensity and phase of the received millimeter wave signals to derive the intensity to derive the intensity for each volume element from the millimeter wave data.

In the coordinate system of the sensor, the tilted sensors lead to a tilted image of the object 13 to be imaged, a coordinate transformation is performed to ensure that the reconstructed image represents the object as it would appear from a non-tilted perspective, typically from above. This transformation is essential for accurate imaging of objects, such as boxes, which are commonly encountered in logistics environments. Further, in the case of a millimeter wave imaging device comprising more than one sensor and wherein the sensors may be tilted with respect to each other. The millimeter wave are in essence measured with respect to different coordinate systems. Thus, coordinate transformation must be performed during processing in order to derive the images. The processor also performs resampling of the reconstructing volume elements in order to generate a dense image.

The image information derived from the millimeter wave data can be used as input to algorithms for the purpose of material testing, completeness control, object classification, and/or object localization.

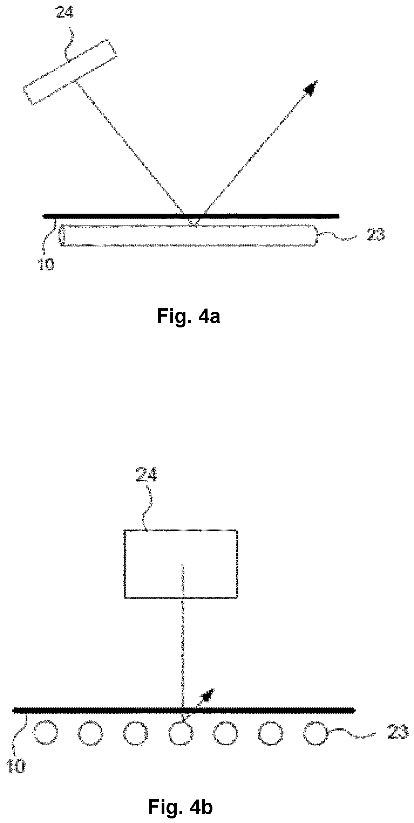

Fig. 4 shows a tilted sensor and conveyor belt in a side and front view. Fig. 4a shows the tilted sensor 24 and the transport system in a front view. In this figure, metal rollers 23 are placed underneath the support surface 10. These metal rollers function as a conveyor belt. The tilted sensor ensures that the reflections from the metal roller caused by radiation in the preferred emission direction of the sensor do not fall back onto the sensor but are deflected away from the sensor.

Fig. 4b shows the tilted sensor 24 and the transport system in a side view. The multiple metal rollers 23 that form the conveying system are placed underneath the support surface 10. The sensor is tilted in the longitudinal direction of the metal rollers as shown in a side view in figure 4a, so that the reflections are deflected away from the tilted sensor.

As appreciable from the above, the millimeter wave imaging device avoids the problematic reflections caused by the typically present metal surfaces parallel to the support plane defined by the support surface supporting the object to be images by tilting the sensors with respect to the support plane. For planar antenna arrangements the surface normal of the sensors must be tilted. For more complex antenna arrangement the preferred emission direction of the sensor must be tilted with respect to the surface normal of the support plane.

The imaging system may comprise two sensors, but also only one sensor or more than two sensors, such as four sensors or eight sensors. Each sensor may comprise a plurality of antennas for emitting millimeter waves and a plurality of antennas for receiving millimeter waves. The antennas may be in a plane parallel to the front surface of the sensor or three-dimensionally arranged within the sensor. The preferred emission direction of the sensor is tilted with respect to a support plane on which the object to be imaged is located. The sensors may be controlled by a processing unit. The processing unit controls the millimeter wave emission and processes the received millimeter wave data from the receiving antennas. The processing unit may further process the millimeter wave data in order to reconstruct a three-dimensional intensity volume. The processor may also use the information on the emitted millimeter wave radiation to process the millimeter wave data.

The millimeter wave data is processed in order to reconstruct a three dimensional intensity volume within the reconstruction volume of the observation volume by deriving an intensity value for each volume element of the reconstruction volume.

As can be shown from the description above, the invention solves the problem by tilting the preferred emission direction of the sensors with respect to the support plane onto which the object to be images is positioned. The reason being that in typical applications the support surface which lies in the support plane comprises metal surfaces that are parallel or tangentially aligned with the support plane and therefore reflect radiation emitted in the main transmission direction of the antenna back to the sensor. Even if the support surface such as a conveyor belt does not comprise reflecting material, in typical transport system reflecting material such as support plates or roller lie often beneath the support plane causing the same problem. Tilting the sensor with respect to the support plane on which the object to be imaged is position, therefore avoids that radiation emitted in the main transmission direction or preferred transmission direction is reflected back to the receiving antennas of the sensor. Thereby the tilt avoids that these reflection which is magnitudes greater than any other reflection is received. Accordingly, the reflection does not disturb the image.

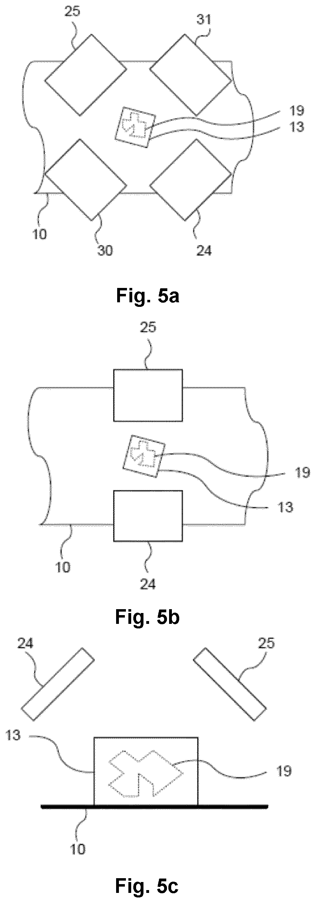

Fig. 5 shows an arrangement with four sensors in a top view and an arrangement with two sensors in a top and a front view. Fig. 5a shows an arrangement with four sensors with are placed above a support surface 10 in which the object to be imaged may be placed. An object 13 with its content 19 is placed on the support plane, below the sensor. The object is placed in the reconstruction volume within the near-field distance to the sensors. The object 13 and specifically its content 19 are to be imaged. However, the number of sensors is not limited. Further, the sensors can be aligned opposite to each other or in parallel. The sensors may be offset to each other. Further, although the two sensors shown in fig. 4 and 5 are arranged along an axis perpendicular to the transport direction of the transport mechanism transporting the object on the support surface, the sensors may be position in any direction. For example, the sensors may be arranged in a direction parallel to the transport direction and/or with an offset thereto.

In Fig. 5b the tilted sensors 24 and 25 are shown from above. Sensors 24 and 25 are tilted in relation to the objects which is placed on the support surface 10. The object 19 is placed on the transportation place and contains a content of the object 19 which is to be imaged.

The main emission direction of the sensors is perpendicular to the surface of the sensors, and the tilting is oriented such that the reflections do not return to the sensor.

Fig. 5c shows a front view of the setup shown in Fig. 5b. The sensors 24 and 25 are tilted towards the object 13 which is placed on the support surface 10. The object 13 contains a content of the object 19 which is to be imaged.

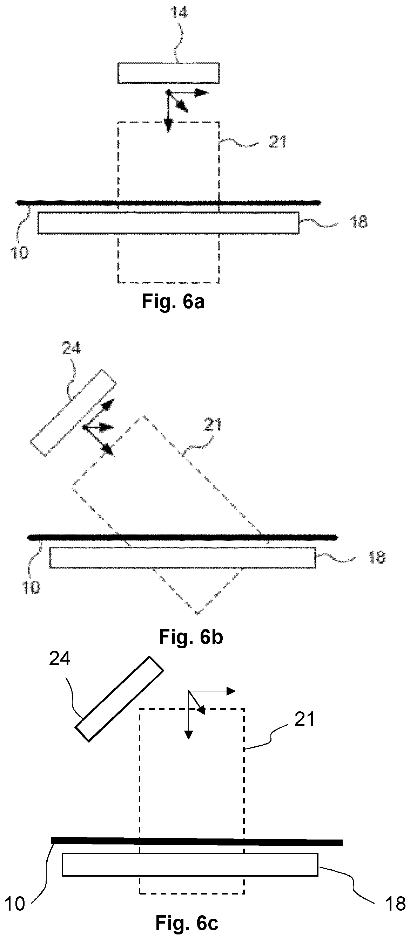

In a symmetric setup, a potential issue could arise where reflections of the main radiation axis from one sensor are received by the opposing sensor. To address this, two solutions can be implemented. First, the symmetry of the sensor arrangement can be intentionally disrupted by introducing a lateral or height offset between the sensors. This prevents direct alignment of the main emission and reception axes. Second, time multiplexing can be used, where the opposing receiving antennas are inactive while the transmitting antennas are emitting. This ensures that no unintended reflections are captured. Fig. 6a shows a front view of a sensor 14 parallel to the support plane on which the object is placed when imaged and a sensor 14 tilted with respect to the support plane and the orientation of the respective corresponding Cartesian coordinate system of the corresponding observation volume. The Cartesian coordinate system is with respect to two of its axes aligned or parallel to the support plane. Fig. 6b shows a prior art sensor 14 which is oriented parallel to the support surface 10. Metal plates 18 are present underneath the support surface 10. The observation volume is located underneath the sensor 14 and extends below the transportation plane and the metal plates. The reconstruction volume is the area of the observation volume from which images are derived, in particular from the reconstructed intensity within the reconstruction volume.

The corresponding Cartesian coordinate system of the image area 21 is typically oriented in such a way that, starting from sensor 14, the first and second coordinates describe any plane which is parallel to the sensor plane. The sensor plane is parallel to the support plane in this case. The third coordinate points vertically perpendicular downwards in the direction of the support plane.

If an object, for example, a box is placed on the support surface 10 the Cartesian coordinate system corresponds or is parallel to the Cartesian coordinate system of the observation volume of the sensor 14.

The object to be images may be moved along a direction on the support plane by a transport mechanism. The object may be imaged when the objection is present in the reconstruction volume in the observation volume.

Fig 6b shows a tilted sensor 24 according to the present disclosure which preferred emission direction is oriented in a tilted angle towards the support surface 10. Metal plates 18 are present underneath the support surface 10. The metal plates could be plates present in a conveyor belt that moves the object along a path in a transportation plane which is aligned with the support plane. The image area 21 is located in near field distance underneath the tilted sensor 24 and extends below the support plane and the metal plates. The corresponding Cartesian coordinate system of the observation volume which corresponds to the natural coordinate system of the tilted sensor 24 is oriented in such a way that, starting from sensor 14, the first and second coordinates, for example, describe the plane of the sensor, the sensor plane. In this case, the sensor plane is tilted towards the support surface 10.

The third coordinate axis is oriented, in this case, towards the support plane 10 at a tilted angle which corresponds to the angle between the tilted sensor and the support plane.

If an object, for example a box, is placed on the support surface 10 the Cartesian coordinate system of the sensor does not correspond to the Cartesian coordinate naturally associated with the system of the box. A natural Cartesian coordinate system associated with a box would be oriented, such that the axes align with the edges of the box. This is shown in Fig. 6c showing that the sensor surface is tilted with respect to the coordinate system of the box.

If the sensor is tilted relative to the transportation plane, the Cartesian coordinate system of the transportation plane does not align with the natural Cartesian coordinate system of the box. This misalignment introduces an angular difference that must be accounted for when analysing or manipulating the box. Corrections or transformations (e.g., rotation matrices) are be necessary to map measurements or operations between these coordinate systems accurately.

In this case, a coordinate transformation is performed to ensure that the reconstructed image represents the object as it would appear from a non-tilted perspective, typically from above. This transformation is essential for accurate imaging of objects, such as boxes, which are commonly encountered in logistics environments. The processing performed by the processing unit to reconstruct images in the reconstruction volume of the observation volume therefore comprises coordinate transformations taking into account the tilt between the sensor taking the millimeter wave data and the orientation of the support surface and the objection on the support surface.

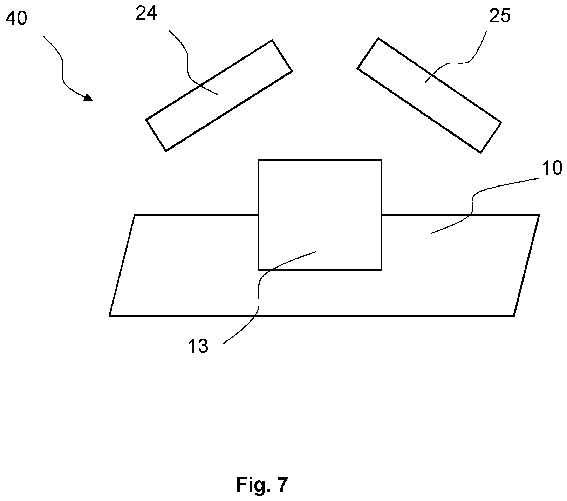

Fig. 7 shows a millimeter wave imaging device 40 according to the present invention. An object 13 to be imaged is placed on a support surface 10. The millimeter imaging device comprises sensors 24, 25 and is configured such that the sensors 24, 25 that are tilted with respect to the support surface, i.e. millimeter wave imaging device is configured such that during use its sensors are tilted to the surface which supports the object to be imaged. The preferred direction of emitted radiation of the sensors is non-perpendicular to the support surface. It is important to note that the sensors may be rotated around any angle, as the key aspect of the invention is the tilting of the sensors, not their rotational orientation.

The main emission direction of the sensors is perpendicular to the surface of the sensors, and the tilting is oriented such that the reflections do not return to the sensor.

The imaging system may comprise two sensors, but also only one sensor or more than two sensors, such as four sensors or eight sensors.

The near-field volume of the millimeter wave imaging device is in front of the sensors 24, 25. The reconstruction volume lies within the near-field volume.

Each sensor may comprise a plurality of antennas for emitting millimeter waves and a plurality of antennas for receiving millimeter waves. The antennas may be arranged three-dimensionally within the sensor. The sensors may be controlled by a processing unit. The processing unit controls the millimeter wave emission and processes the received millimeter wave data from the receiving antennas. The processing unit may further process the millimeter wave data in order to reconstruct a three-dimensional intensity volume. The processor may also use the information on the emitted millimeter wave radiation to process the millimeter wave data.

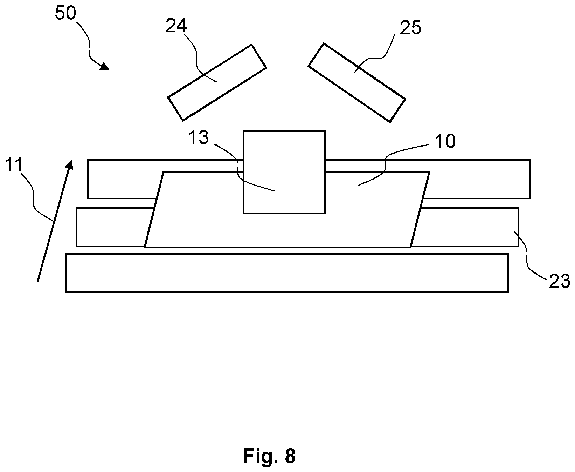

Fig. 8 shows a millimeter wave imaging device according to the present invention attached to a transport system 50. The figure shows a system comprising the transport system and the millimeter wave imaging device forming a millimeter wave imaging system. An object 13 to be imaged is placed on a support surface 10. A transport system, such as a conveyor belt consisting of multiple metal rollers 23 is placed underneath the support surface. The object is moved along a transport direction 11.

The transport system with a support surface 10 is configured to move objects 13 on a transport plane along a transport direction 11. The transport system may move the support surface supporting the objects. In this case the support plane corresponds to the transport plane. The transport system may for example comprises a conveyor belt comprising metal rollers 23 to support the conveyor belt. The conveyor belt acts as support surface which supports the object to be imaged. The surface of the conveyor belt may move along the transport direction 11 in the transport plane. Alternatively, there may be several metal plates supporting the conveyor belt.

The millimeter imaging device comprises sensors 24, 25 that are tilted with respect to the support surface. I.e. the surface of the sensors 24, 25 are non-parallel to the support surface, the preferred direction of emitted radiation is non-perpendicular to the support surface. In case of a millimeter wave system comprising the transport system, which is configured to transport objects to be imaged, in particular to transport the objects into the observation volume and the reconstruction volume of said observation volume, the sensors, in particular the preferred emission direction of the sensors is tilted with respect to the transportation plane. It is important to note that the sensors may be rotated around any angle, as the key aspect of the invention is the tilting of the sensors, not their rotational orientation.

The main emission direction of the sensors is perpendicular to transportation plane, and the sensors are tilted such that the reflections do not return to the sensor.

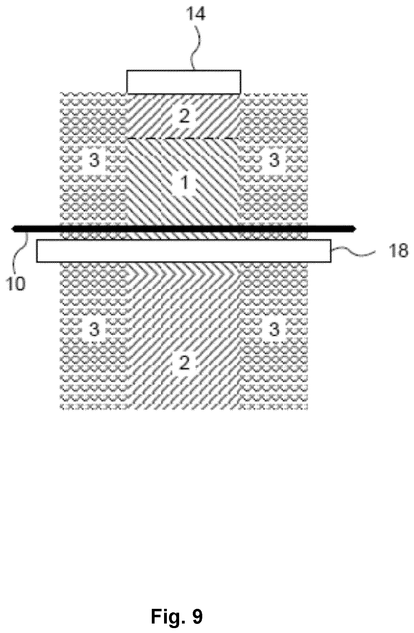

Fig. 9 shows the regions where artifacts are caused and appear. Artifacts are always visible in region 1 but are caused in regions 1, 2, and 3. Reflections from reflective surfaces in region 1 directly appear as artifacts in the reconstruction volume. In region 2, reflections create artifacts in region 1 due to ambiguities in distance or z-direction, which can be mitigated by tilting the sensor surface if the reflective surfaces are planar and parallel to the sensor. In region 3, reflections contribute to noise in the reconstruction volume; this can be reduced by tilting the sensor or covering reflective surfaces with absorbers.

In practice, a support surface may not be perfectly level. It can sag due to the underlying metal rollers or metal plates. This sagging causes the rollers or plates to reflect light at angles deviating from vertical, depending on the degree of sagging. As a result, even rollers or plates that are not directly beneath the sensor but are within area 3 can contribute to unwanted reflections and interference signals that get reflected into area 2. Tilting the sensors prevents these reflections occurring in area 3, caused by the sagging, from reaching the sensor. Reflections are in particular effectively prevented when the tilt of the sensor exceeds any angle of tilt of the underlying metal plates caused by the sag.

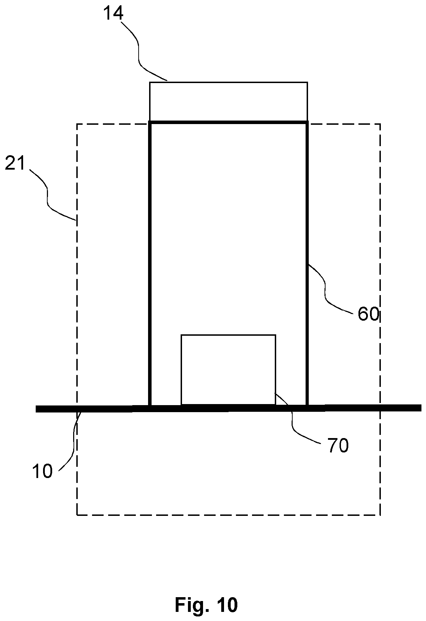

Fig. 10 shows the sensor 14 and the support surface 10. The observation volume 21 is located beneath the sensor 14 but extends beyond the sides and even partially below the support surface 10. The observation volume is the volume from within which the sensors received reflected millimeter wave signals. The near field volume 60 specifically refers to the volume directly below the sensor 14, extending only as far as the support surface 10. The reconstruction volume 70, in turn, is a subset of the near-field volume 60 where the object to be imaged is placed while imaging the object. The intensity and/or phase information are reconstructed within the reconstruction volume based on the received millimeter wave image data. However, disturbances within the broader observation volume 21 can influence how the reconstruction volume 70 is processed. This can result in artifacts or reflections appearing in the reconstruction volume 70, originating from interactions within the observation volume 21.Only exemplary the volumes are shown as cuboidal volumes in the appended figures. It is to be understood that in particular the observation volume may deviate from the cuboidal form, since the near filed volume depends on the aperture of the sensors. For example, in case the sensors utilized in the embodiments of the invention are round sensors, i.e. have a round aperture, the observation volume deviates from the cuboidal form. The reconstruction volume may typically be chosen as a cuboidal volume, however other forms adapted to the use case may be chosen. For example, the reconstruction volume could be a sphere or could be a parallelepiped body.

The foregoing descriptions are only implementation manners of the present invention, the scope of the present invention is not limited to this. Any variations or replacements can be easily made through person skilled in the art. Therefore, the protection scope of the present invention should be subject to the protection scope of the attached claims

### Reference numbers

- 1, 2, 3,: Artifact areas
- 10: Support surface
- 11: Transport direction
- 12: Drive unit
- 13: Object
- 14, 15: Sensor
- 16: Processing unit
- 17: Rotary encoder
- 18: Metal plates
- 19: Content of object
- 20: Reflection point
- 21: Observation volume (V)
- 22: Non-reflected metal plate
- 23: Metal roller
- 24, 25, 30, 31: Tilted sensor
- 40: Imaging system
- 50: Imaging and transport system
- 60: Near-field volume (NF)
- 70: Reconstruction volume (R)

## Claims

1. Millimeter wave imaging device for the inspection of an object in an automated processing environment, in particular a logistics center, the device comprising:
• a millimeter wave sensor providing millimeter wave data,
• wherein the millimeter wave sensor comprises a plurality transmitting antennas configured to emit millimeter wave signals and a plurality of receiving antennas configured to detect reflections of the emitted millimeter wave signals from within an observation volume (V),
• wherein the millimeter wave sensor is arranged in a sensor plane (S1),
• wherein the millimeter wave sensor is arranged in near-field (NF) distance from a support plane (S2) ,
• wherein the object is positioned on the support plane (S2) in an reconstruction volume (R) in the observation volume (V) when imaged,
• a processing unit, and wherein the processing unit is configured to:
• receive the millimeter wave data from the millimeter wave sensor,
• process the millimeter wave data to generate spatially resolved information about the reconstruction volume (R) of the object, wherein the surface normal of the sensor plane (S1) has a non-perpendicular angle (a) to the support plane (S2).

2. The device according to claim 1, wherein the spatially resolved information about the reconstruction volume (R) comprises three-dimensional data and/or two-dimensional data.

3. The device according to claims 1 or 2, further comprising the processing unit to be configured to generate a reconstructed intensity volume representing the reconstruction volume (R), preferably based on the spatially resolved information about the reconstruction volume (R).

4. The device according to claim 3, wherein the processing unit is further configured to reconstruct one or more two-dimensional cross-sectional images or two-dimensional projection images from the intensity volume.

5. The millimeter wave imaging device according to any of the preceding claims, wherein, during use, the object to be imaged moves in a transport plane (T)

6. The millimeter wave imaging device according to any of the preceding claims, wherein the processor is further configured to adjust the image processing of the millimeter wave data based on the non-perpendicular angle (a) between the surface normal of the sensor plane (S1) and the support plane (S2).

7. The millimeter wave imaging device according to any of the preceding claims, wherein the processor is further configured to apply an angular correction algorithm to the millimeter wave data based on the angle (a) between the surface normal of the sensor plane (S1) and the support plane (S2).

8. The millimeter wave imaging device according to any of the preceding claims, further comprising a sensor frame on which at least one sensor is mounted.

9. The millimeter wave imaging device according to claim 6, wherein the sensor frame being arranged such that:
• the sensor frame being arranged parallel to the support plane (S2), or
• the sensor frame being tilted at an angle relative to the support plane (S2).

10. The millimeter wave imaging device according to any of the preceding claims, further comprising at least two sensors, and wherein each sensor is arranged in a sensor plane (S1a, S1b, ...,S1n), wherein the two or more sensors being arranged such that:
• at least one sensor is tilted with respect to the at least one other sensor.
• all surface normals of the sensor planes (S1a,..., S1n) are tilted at the same angle relative to the support plane (S2), or
• the surface normals of the sensor planes (S1a,..., S1n) are tilted at different angles (a, b, c, d) relative to the support plane (S2).

11. The millimeter wave imaging device according to any of the preceding claims, wherein:
• the angle between the surface normal of the sensor plane (S1) and the support plane (S2) is adjustable in real-time, and
• the processor is further configured to apply an angular correction algorithm to the millimeter wave data, wherein the algorithm automatically adjusts based on real-time changes in the angle between the surface normal of the sensor plane (S1) and the support plane (S2).

12. A millimeter wave inspection system for inspecting objects on a transport mechanism in an automated processing environment, in particular a logistics environment, the inspection system comprising:
• a transport mechanism configured to transport objects to be imaged,
• wherein the object is positioned on a support surface of the transport mechanism plane,
• wherein the object is positioned on the support plane (S2) in an reconstruction volume (R) in the observation volume (V) when imaged,
• a millimeter wave sensor providing millimeter wave data,
• wherein the millimeter wave sensor is arranged in a sensor plane (S1),
• wherein the millimeter wave sensor comprises a plurality of transmitting antennas configured to emit millimeter wave signals and a plurality of receiving antennas configured to detect reflections of the emitted millimeter wave signals from within an observation volume (V),
• wherein the sensor plane (S1) is in near-field (NF)
• wherein the millimeter wave sensor is mounted to the transport mechanism such that the surface normal of the sensor plane (S1) has a non-perpendicular angle (a) to the support plane (S2).

13. The system according to claim 12, wherein the system is configured to generate spatially resolved information about the reconstruction volume (R).

14. The system according to claims 12 or 13, wherein the spatially resolved information about the reconstruction volume (R) comprise three-dimensional data and/or two-dimensional data and wherein the system, in particular, further comprises the processing unit to be configured to generate an intensity volume representing the reconstruction volume (R), preferably based on the spatially resolved information about the reconstruction volume (R).

15. A method for producing a millimeter wave image of an object in an automated processing environment, in particular a logistics environment, the method comprising the steps of:
• providing a millimeter wave sensor,
• wherein the millimeter wave sensor comprises a plurality of transmitting antennas configured to emit millimeter wave signals and a plurality receiving antennas configured to detect reflections of the emitted millimeter wave signals from within an observation volume (V),
• wherein the sensor is arranged at a sensor plane (S1),
• moving the object on a path along a transport plane (T),
• positioning the object in on a support plane (S2) in an reconstruction volume (R) in the observation volume (V),
• wherein the surface normal of the sensor plane (S1) has a non-perpendicular angle to the support plane (S2),
• processing the millimeter wave data to generate spatially resolved information about the reconstruction volume (R) of the object based on the millimeter wave data generated by the sensor.

## Amended claims

### Amended claims in accordance with Rule 137(2) EPC.

1. Millimeter wave imaging device for the inspection of an object (13) in an automated processing environment, in particular a logistics center, the device comprising:
• a millimeter wave sensor (14, 15; 24, 25; 30, 31) providing millimeter wave data,
• wherein the millimeter wave sensor (14, 15; 24, 25; 30, 31) comprises a plurality transmitting antennas configured to emit millimeter wave signals and a plurality of receiving antennas configured to detect the intensity and the phase shift of the reflections of the emitted millimeter wave signals from within an observation volume (V) (21),
• wherein the millimeter wave sensor (14, 15; 24, 25; 30, 31) is arranged in a sensor plane (S1),
• wherein the millimeter wave sensor (14, 15; 24, 25; 30, 31) is arranged in near-field (NF) distance from a support plane (S2),
• wherein the object (13) is positioned on the support plane (S2) in an reconstruction volume (R) (70) in the observation volume (V) (21) when imaged,
• wherein every point within the reconstruction volume (70) is observed by numerous antenna pairings from various directions,
• wherein at least one pairing of the numerous antenna pairings is configured to detect reflected millimeter waves from the object's (13) surface resulting in a brightness value for a corresponding voxel in the reconstruction volume (70),
• a processing unit (16), and wherein the processing unit is configured to:
• receive the millimeter wave data from the millimeter wave sensor (14, 15; 24, 25; 30, 31),
• process the millimeter wave data to generate spatially resolved information about the reconstruction volume (R) (70) of the object (13), wherein the surface normal of the sensor plane (S1) has a non-perpendicular angle (a) to the support plane (S2).

2. The device according to claim 1, wherein the spatially resolved information about the reconstruction volume (R) (70) comprises three-dimensional data and/or two-dimensional data.

3. The device according to claims 1 or 2, further comprising the processing unit (16) to be configured to generate a reconstructed intensity volume representing the reconstruction volume (R), preferably based on the spatially resolved information about the reconstruction volume (R).

4. The device according to claim 3, wherein the processing unit (16) is further configured to reconstruct one or more two-dimensional cross-sectional images or two-dimensional projection images from the intensity volume.

5. The millimeter wave imaging device according to any of the preceding claims, wherein, during use, the object (13) to be imaged moves in a transport plane (T).

6. The millimeter wave imaging device according to any of the preceding claims, wherein the processing unit (16) is further configured to adjust the image processing of the millimeter wave data based on the non-perpendicular angle (a) between the surface normal of the sensor plane (S1) and the support plane (S2).

7. The millimeter wave imaging device according to any of the preceding claims, wherein the processing unit (16) is further configured to apply an angular correction algorithm to the millimeter wave data based on the angle (a) between the surface normal of the sensor plane (S1) and the support plane (S2).

8. The millimeter wave imaging device according to any of the preceding claims, further comprising a sensor frame on which at least one sensor (14, 15; 24, 25; 30, 31) is mounted.

9. The millimeter wave imaging device according to claim 8, wherein the sensor frame being arranged such that:
• the sensor frame being arranged parallel to the support plane (S2), or
• the sensor frame being tilted at an angle relative to the support plane (S2).

10. The millimeter wave imaging device according to any of the preceding claims, further comprising at least two sensors (14, 15; 24, 25; 30, 31), and wherein each sensor (14, 15; 24, 25; 30, 31) is arranged in a sensor plane (S1a, S1b, ...,S1n), wherein the two or more sensors (14, 15; 24, 25; 30, 31) being arranged such that:
• at least one sensor (24, 25; 30, 31) is tilted with respect to the at least one other sensor.
• all surface normals of the sensor planes (S1a,..., S1n) are tilted at the same angle relative to the support plane (S2), or
• the surface normals of the sensor planes (S1a,..., S1n) are tilted at different angles (a, b, c, d) relative to the support plane (S2).

11. The millimeter wave imaging device according to any of the preceding claims, wherein:
• the angle between the surface normal of the sensor plane (S1) and the support plane (S2) is adjustable in real-time, and
• the processing unit (16) is further configured to apply an angular correction algorithm to the millimeter wave data, wherein the algorithm automatically adjusts based on real-time changes in the angle between the surface normal of the sensor plane (S1) and the support plane (S2).

12. A millimeter wave inspection system comprising the millimeter wave imaging device of claim 1 for inspecting objects (13) on a transport mechanism (50) in an automated processing environment, in particular a logistics environment, the inspection system comprising:
• a transport mechanism configured to transport objects (13) to be imaged,
• wherein the object (13) is positioned on a support surface of the transport mechanism plane,
• wherein the object (13) is positioned on the support plane (S2) in an reconstruction volume (R) (70) in the observation volume (V) (21) when imaged,
• a millimeter wave sensor (14, 15; 24, 25; 30, 31) providing millimeter wave data,
• wherein the millimeter wave sensor (14, 15; 24, 25; 30, 31) is arranged in a sensor plane (S1),
• wherein the millimeter wave sensor (14, 15; 24, 25; 30, 31) comprises a plurality of transmitting antennas configured to emit millimeter wave signals and a plurality of receiving antennas configured to detect reflections of the emitted millimeter wave signals from within an observation volume (V),
• wherein the sensor plane (S1) is in near-field (NF)
• wherein the millimeter wave sensor (14, 15; 24, 25; 30, 31) is mounted to the transport mechanism (50) such that the surface normal of the sensor plane (S1) has a non-perpendicular angle (a) to the support plane (S2).

13. The system according to claim 12, wherein the system is configured to generate spatially resolved information about the reconstruction volume (R).

14. The system according to claims 12 or 13, wherein the spatially resolved information about the reconstruction volume (R) (70) comprise three-dimensional data and/or two-dimensional data and wherein the system, in particular, further comprises the processing unit to be configured to generate an intensity volume representing the reconstruction volume (R) (70), preferably based on the spatially resolved information about the reconstruction volume (R) (70).

15. A method for producing a millimeter wave image of an object (13) in an automated processing environment, in particular a logistics environment, the method comprising the steps of:
• providing a millimeter wave sensor (14, 15; 24, 25; 30, 31),
• wherein the millimeter wave sensor (14, 15; 24, 25; 30, 31) comprises a plurality of transmitting antennas configured to emit millimeter wave signals and a plurality receiving antennas configured to detect the intensity and the phase shift of the reflections of the emitted millimeter wave signals from within an observation volume (V) (21),
• wherein the sensor is arranged at a sensor plane (S1),
• moving the object (13) on a path along a transport plane (T),
• positioning the object (13) in on a support plane (S2) in an reconstruction volume (R) (70) in the observation volume (V) (21),
• observing every point within the reconstruction volume (70) by numerous antenna pairings from various directions,
• detecting, by the at least one pairing of the numerous antenna pairings, reflected millimeter waves from the object's (13) surface resulting in a brightness value for a corresponding voxel in the reconstruction volume (70),
• wherein the surface normal of the sensor plane (S1) has a non-perpendicular angle to the support plane (S2),
• processing the millimeter wave data to generate spatially resolved information about the reconstruction volume (R) (70) of the object (13) based on the millimeter wave data generated by the sensor.
